# EUROPEAN PATENT SPECIFICATION

(11) **EP 0 520 648 B1**
(45) Date of publication and mention of the grant of the patent: **03.09.1997**
(21) Application number: 92305302.9
(22) Date of filing: 10.06.1992
(51) Int. Cl.: G11B 5/53

(54) **Magnetic head drum**
Magnetkopftrommel
Tambour à tête magnétique

(30) Priority: 27.06.1991 JP 156387/91
(43) Date of publication of application: 30.12.1992
(73) Proprietor: SONY CORPORATION, Tokyo 141 (JP)
(72) Inventor: Hasegawa, Shinichi, c/o Patents Div., Sony Corp., Tokyo 141 (JP)
(74) Representative: Cotter, Ivan John

(56) References cited:
- EP-A- 0 271 167
- PATENT ABSTRACTS OF JAPAN vol. 12, no. 166 (P-704)19 May 1988 & JP-A-62 279 512
- PATENT ABSTRACTS OF JAPAN vol. 14, no. 574 (P-1145)20 December 1990 & JP-A-22 46 010
- PATENT ABSTRACTS OF JAPAN vol. 13, no. 438 (P-939)3 October 1989 & JP-A-11 66 315

## Description

This invention relates to magnetic head drums.

A known magnetic head drum for helical-scan type magnetic recording and reading of video data on and from magnetic tape comprises a stationary spindle, a stationary drum secured to the spindle, a rotary drum rotatably supported on the spindle, and a motor for rotating the rotary drum. The stationary drum includes a cylindrical side wall having a helical guide shoulder for helically guiding the magnetic tape. The rotary drum includes a cylindrical side wall having at its outer periphery a magnetic head for recording and reading video signals on the magnetic tape. The motor comprises a rotor secured to an upper face of the rotary drum, a stator securely connected to the spindle and disposed a predetermined distance from the rotor, and a back yoke secured to a top end of the cylindrical side wall of the rotary drum. A transformer for the stator is secured to the stationary drum in opposed relationship to a transformer for the rotor, which is secured to the rotary drum and electrically connected to the magnetic head.

A head adjustment screw for adjusting a substantially vertical position of the magnetic head is mounted on a lower face of the rotary drum. The stator is electrically connected to a flexible circuit board via a guide protector which extends radially and outwardly from a top end portion of the spindle above the rotary drum so that the flexible circuit board is remote from the back yoke mounted on the rotary drum. An earth member is disposed on the rotor and connected at one end thereof to the spindle, so that the earth member is rotated together with the rotor while contacting the spindle. Electric charges developed upon rotation of the rotary drum are transferred through the earth member to the spindle.

Since the head adjustment screw is hidden behind the rotor when these components are mounted on the rotary drum, tightening or untightening of the head of the head adjustment screw cannot readily be performed after assembly. There are other problems, as follows.

Firstly, it is necessary to perform assembly of the rotor to the rotary drum with high accuracy to effect dynamic balancing for the rotary drum.

Secondly, the stator suffers from undesirable vibration upon rotation of the rotary drum around the spindle. The vibration results in generation of noise, that is, electromagnetic noise of the motor.

Thirdly, the end of the earth member, which contacts the spindle, becomes worn during rotation of the rotary drum, and also the torque of the rotary drum is reduced due to the contact.

Fourthly, there is a demand for a magnetic head drum in which a substantially vertical position of a magnetic head is readily adjustable, and dynamic balancing of a rotary drum is readily effected, and which is rotatable at high speed without generating electromagnetic noise.

Patent Abstracts of Japan, Vol 13, No 438, (P-939) is used for the delimitation of the appended claim 1 and discloses a rotor transformer fixed to a sleeve which is fixed to a revolving shaft with a head base of a magnetic head provided on a member clamped between the sleeve and the rotor transformer and acted upon, for adjustment, by a screw passing in an axial direction through a peripheral rim of a drum also secured on the sleeve.

Patent Specification EP-A-0 271 167 discloses means for varying the width of a gap between a magnetic head and a head disc wherein the head is mounted on a supporting plate clamped to the head disc and a set-screw engaged in a threaded aperture in the head disc acts with its free end on a portion of the supporting plate located between the clamping position of the supporting plate and the magnetic head mounted thereon.

According to the present invention there is provided a magnetic head drum for data recording and reading apparatus, the head drum comprising:
a stationary drum;
a rotary sleeve;
a rotary drum supported on said sleeve;
a motor for rotating the rotary drum, the motor having a rotor securely mounted on the sleeve and a stator securely mounted on the stationary drum in opposed and spaced relationship to the rotor;
a resilient head mount secured to the rotary portion;
a magnetic head secured to the head mount; and
a head adjustment screw for adjusting the position in the axial direction of the magnetic head, wherein the head adjustment screw is mounted on and passes through the rotary drum and has one end operatively exposed to the exterior of the magnetic head drum and the other end contacting the head mount,
characterised in that
the stationary drum is securely mounted on a stationary spindle;
the rotary sleeve is rotatably supported on the spindle; and
the rotary sleeve has first and second axially spaced flanges to which the rotary drum and the rotor of the motor are secured, respectively.

The invention will now be described by way of example with reference to the accompanying drawings, throughout which like parts are referred to by like references, and in which:
Figure 1 is a sectional view of an embodiment of magnetic head drum according to the present invention;
Figure 2 is an exploded view of Figure 1 and shows a rotor of a motor and a sleeve; and
Figure 3 is a perspective view of the rotor of Figure 2, seen from the underside.

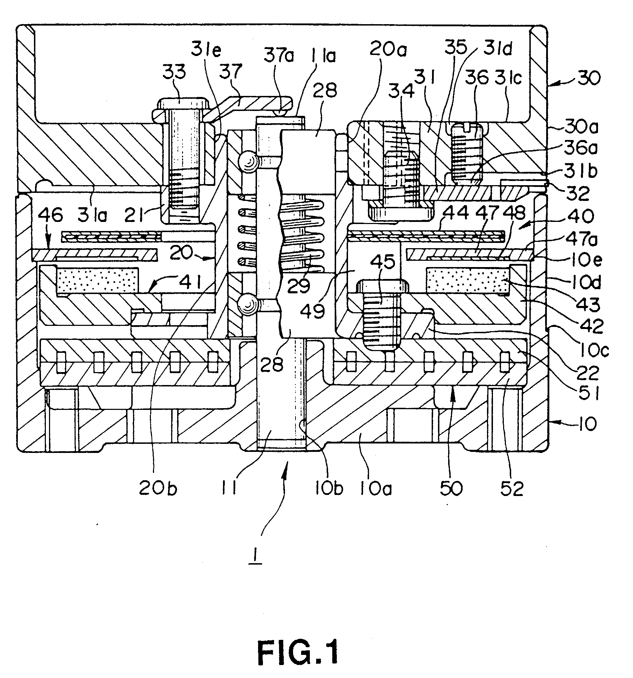

Referring to Figure 1, a magnetic head drum 1 comprises a stationary spindle 11 vertically extending along a centre axis thereof, a cylindrical stationary drum 10 securely mounted on the spindle 11, a cylindrical sleeve 20 rotatably supported on the spindle 11 via a pair of annular bearings 28, a cylindrical rotary drum 30 securely mounted on the sleeve 20, and a motor 40 for rotating the rotary drum 30. The motor 40 comprises a rotor 41 and an annular stator 46.

The stationary drum 10 has a disc-like bottom wall 10a and a cylindrical side wall uprightly extending from an outer periphery of the bottom wall 10a parallel to the spindle 11. The bottom wall 10a has a cylindrical central opening 10b into which the spindle 11 is press-fitted. Secured to the bottom wall 10a is a transformer 52 for the stator 46, which is a component of a transformer unit 50 for the motor 40. The cylindrical side wall has a helical guide shoulder 10c for helically guiding magnetic tape (not shown) along an outer circumferential face 10d thereof. The bearings 28 are mounted on the spindle 11 in axially spaced relationship to each other. A coil spring 29 is mounted on a mid-portion of the spindle 11 between the bearings 28, in order to prevent the bearings 28 from mislocating on the spindle 11. The sleeve 20 is mounted on the bearings 28 so as to be rotatably supported thereon.

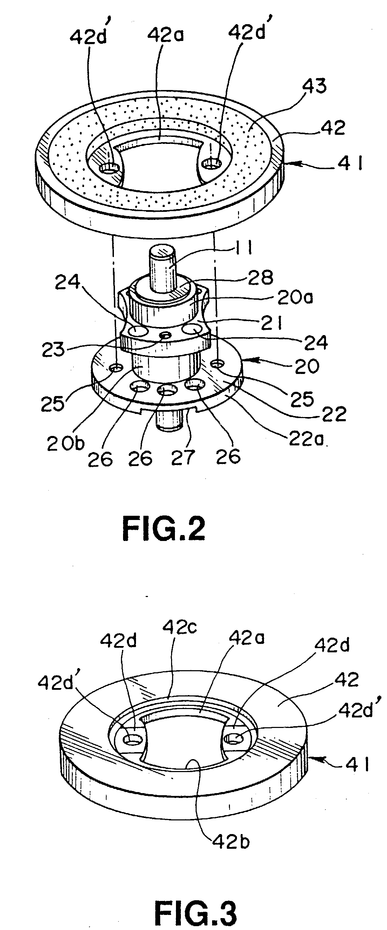

As shown in Figures 1 and 2, the sleeve 20 has an upright cylindrical body portion and lower and upper flanges 22 and 21 which are integrally formed with the cylindrical body portion. The flanges 22 and 21 extend radially and outwardly from a lower end and an intermediate portion of the cylindrical body portion, respectively. The cylindrical body portion of the sleeve 20 is divided by the upper flange 21 into an upper section 20a above the upper flange 21 and a lower section 20b defined between the flanges 21 and 22. The upper flange 21 is composed of diametrically opposed sectoral portions. Each of the sectoral portions has a threaded hole 23 substantially at the centre thereof and holes 24 which are formed on opposite sides of the threaded hole 23 and spaced equidistantly from the threaded hole 23. The lower flange 22 is of an annular shape and has threaded holes 25 which are formed thereon at diametrically opposed positions such that a line extending between the holes 25 makes substantially a right angle with a iine extending between the holes 23 through the centre axis of the spindle 11. The lower flange 22 is also provided with three holes 26 between the threaded holes 25 thereon and a recess 27 on an underside face thereof. The recess 27 extends radially from the three holes 26 to a peripheral edge of the lower flange 22. A transformer 51 for the rotor 41 is fixed by an adhesive or the like on a lower face of the lower flange 22 so as to be opposed to, and spaced by a predetermined distance, for example, about 25 µm, from the transformer 52 for the stator 46, which is securely mounted to the stationary drum 10.

As shown in Figures 1 and 2, the rotor 41 of the motor 40 includes a disc-like casing 42 and an annular magnet 43 secured on an upper face of the casing 42.

As shown in Figures 2 and 3, the casing 42 of the rotor 41 has a central opening 42a which is of approximately the same size as or a slightly larger size or configuration to that of the upper flange 21 of the sleeve 20, such that the upper flange 21 can pass therethrough upon assembly. The casing 42 has inner protrudent portions which project in the central opening 42a in diametrically opposed relationship to each other. The protrudent portions of the casing 42 each have through-holes 42d'. On an underside of the casing 42 is formed a circular recess 42b having an inward peripheral face 42c. Swelled portions 42d are formed around the holes 42d' on the recess 42b and have a thickness larger by about 50 µm than the remaining recessed portion 42b.

The case 42 with the magnet 43 is secured to the lower flange 22 of the sleeve 20 by means of set screws 45 one of which is inserted into the hole 42d' and the threaded hole 25 as shown in Figure 1. Thus, upon assembling the rotor 41 to the sleeve 20, the inward peripheral face 42c of the recessed portion 42b and the swelled portions 42d matingly abut against the outer peripheral face 22a and the upper face of the lower flange 22 of the sleeve 20, respectively.

As shown in Figure 1, the annular stator 46 of the motor 40 includes a disc-like base plate 47 and a coil unit 48 disposed on a lower face of the base plate 47. The base plate 47 has an outer circumferential edge 47a secured by an adhesive to a stepped portion 10e which is formed on an inner circumferential face of the cylindrical side wall of the stationary drum 10. The stator 46 is disposed in spaced and opposed relationship to the case 42 of the rotor 41 and the magnet 43 secured to the casing 42. The coil unit 48 is spaced at a predetermined distance, for example, about 0.3 mm from the magnet 43. This structure of the stator 46 is helpful for reducing vibrations caused upon rotation of the rotor 41.

The rotor 41 further includes an annular back yoke 44. As shown in Figure 1, the back yoke 44 is supported at its inner periphery through a back yoke retainer 49 on the upper face of the casing 42 of the rotor 41 such that the inner peripheries of the back yoke 44 and the retainer 49 are in contact with an outer surface of the lower section of the sleeve 20. Another back yoke retainer is opposingly mounted on the upper face of the casing 42 in the same manner, but is not shown in the drawings. The retainer 49 allows the back yoke 44 to extend radially and outwardly without contact with the cylindrical side wall of the stationary drum 10, whereby the back yoke 44 of the rotor 41 is kept spaced at a predetermined distance, for example, about 0.3 mm, from the stator 46 secured to the stationary drum 10. The back yoke 44 is made of a laminated plate composed of upper and lower steel films and a resin layer interposed therebetween. The retainer 49 is made of a damping material such as polyester elastomer or rubber. Such material and structural characteristics of the back yoke 44 and the retainer 49 serve for damping vibrations caused upon rotation of the rotor 41.

As shown in Figure 1, the rotary drum 30 has a disc-like bottom wall 31 and a cylindrical side wall uprightly extending from an outer periphery 30a of the bottom wall 31. The bottom wall 31 has a cylindrical central opening 31e having approximately the same inner diameter as the outer diameter of the cylindrical body portion of the sleeve 20. Fitted into the central opening 31e is the upper section 20a of the sleeve 20 mounted on the spindle 11. The rotary drum 30 is secured on the sleeve 20 by means of a set screw 33 which is screwed into the threaded hole 23 of the upper flange 21 of the sleeve 20 via a through-hole passing through the bottom wall 31. When the set screw 33 is completely tightened, the bottom wall 31 of the rotary drum 30 rests on the upper flange 21 of the sleeve 20 such that its lower face 31a and inner circumferential face around the central opening 31e abut against an upper face of the upper flange 21 and an outer surface of the upper section 20a of the cylindrical body portion of the sleeve 20, respectively. Accordingly, the rotary drum 30 is rotatably supported through the sleeve 20 on the spindle 11.

The rotary drum 30 may be of another shape, such as a simple disc-like plate.

As shown in Figure 1, a magnetic head mount 35 is secured to the lower face 31a of the bottom wall 31 of the rotary drum 30 by means of a set screw 34. A magnetic head 32 is attached to an outer periphery of the magnetic head mount 35 by an adhesive or the like. On the lower face 31a of the bottom wall 31 there is provided a recess 31b extending from the mid region up to the outer periphery of the bottom wall 31. A threaded through-hole 31d is formed through the bottom wall 31 and opens into the recess 31b. Into the through-hole 31d is fitted a head adjustment screw 36 so that a bottom end 36a thereof contacts the magnetic head mount 35. The magnetic head mount 35 is made of a flexible material so as to be resilient. Accordingly, a substantially axial position of the magnetic head 32 secured to the magnetic head mount 35 is adjusted by tightening or untightening the head adjustment screw 36.

As seen in Figure 1, an elastic earth plate 37 is secured to an upper face 31c of the bottom wall 31 of the rotary drum 30 by means of one of the set screws 33. The earth plate 37 has a substantially rectangular shape in a plan view, and extends radially and inwardly to above a top end face 11a of the spindle 11. The earth plate 37 is integrally provided with a contact terminal 37a on a lower face thereof near an inner distal end thereof. The contact terminal 37a is biassed by elastic force of the earth plate 37 towards the top end face 11a of the spindle 11 so as to be contacted substantially with the centre of the top end face 11a. Since the contact terminal 37a is in contact substantially with the centre of the top end face 11a of the spindle 11, abrasion of the contact terminal 37a and loss in torque of the rotary drum 30 which are caused upon rotation of the rotary drum 30 are limited to a low level. Moreover, electric charges generated upon rotation of the rotary drum 30 are transferred via the earth plate 37 to the spindle 11 without accumulation of the electric charges in the rotary drum 30 and the magnetic head 32.

Although not shown in the drawings, a lead wire derived from the transformer 51 passes through the recess 27 and the holes 26 of the lower flange 22 and the holes 24 of the upper flange 21, and is electrically connected to the magnetic head 32 via a junction circuit board disposed on the upper face 31c of the bottom wall 31 of the rotary drum 30.

Since the rotor 41 of the motor 40 is secured to the lower flange 22 of the sleeve 20, the rotary drum 30 secured to the upper flange 21 of the sleeve 20 is free from undesired mechanical strain caused when the rotor is mounted on the rotary drum. Therefore, the magnetic head 32 mounted on the rotary drum 30 is prevented from being undesirably affected by the mechanical strain.

In the assembled state of the magnetic head drum 1, the head adjustment screw 36 mounted on the bottom wall 31 of the rotary drum 30 has a head portion exposed to the upper face of the rotary drum 30 in uncovered relationship to other components of the magnetic head drum 1, such as the motor 40. Accordingly, the magnetic head 32 is allowed to be readily adjusted in the substantially axial position.

Upon assembly, a dynamic balancing operation for the structure is easily performed before and after mounting the rotary drum 30 on the sleeve 20. For instance, the dynamic balancing operation after mounting of the rotary drum 30 is accomplishable by mounting a weight in an appropriate position of the upper face 31c of the bottom wall 31 of the rotary drum 30.

## Claims

1. A magnetic head drum (1) for data recording and reading apparatus, the head drum (1) comprising:
a stationary drum (10);
a rotary sleeve (20);
a rotary drum (30) supported on said sleeve (20);
a motor (40) for rotating the rotary drum (30), the motor (40) having a rotor (41) securely mounted on the sleeve (20) and a stator (46) securely mounted on the stationary drum (10) in opposed and spaced relationship to the rotor (41);
a resilient head mount (35) secured to the rotary portion (30);
a magnetic head (32) secured to the head mount (35); and
a head adjustment screw (36) for adjusting the position in the axial direction of the magnetic head (32), wherein the head adjustment screw (36) is mounted on and passes through the rotary drum (30) and has one end operatively exposed to the exterior of the magnetic head drum (1) and the other end contacting the head mount (35),
characterised in that
the stationary drum (10) is securely mounted on a stationary spindle (11);
the rotary sleeve (20) is rotatably supported on the spindle (11); and
the rotary sleeve (20) has first and second axially spaced flanges (21, 22) to which the rotary drum (30) and the rotor (41) of the motor (40) are secured, respectively.

2. A drum according to claim 1, wherein the rotor (41) of the motor (40) has a recess (42b) therein into which the second flange (22) of the sleeve is fitted.

3. A drum according to claim 1 or claim 2, further comprising a resilient earth member (37) electrically connecting the spindle (11) and the rotary drum (30).

4. A drum according to claim 3, wherein the earth member (37) has at one end thereof a contact terminal so as to be biased into contact with the spindle (11).

## Patentansprüche

1. Magnetkopftrommel (1) für Datenaufzeichnungs- und -wiedergabegeräte, mit
- einer ortsfesten Trommel (10),
- einer drehbaren Manschette (20),
- einer auf dieser Manschette (20) sitzenden drehbaren Trommel (30),
- einem Motor (40) zum Drehen der drehbaren Trommel (30), der einen an der Manschette (20) befestigten Rotor (41) und einen gegenüber und in einem bestimmten Abstand zu dem Rotor (41) an der drehbaren Trommel (30) befestigten Stator (46) aufweist,
- einer an der drehbaren Trommel (30) befestigten elastischen Kopfhalterung (35),
- einem an der Kopfhalterung (35) befestigten Magnetkopf (32) sowie
- einer Kopfjustierschraube (36) zum Einstellen der Position des Magnetkopfs (32) in Axialrichtung, wobei die Kopfjustierschraube (36) so an der drehbaren Trommel (30) angebracht ist, daß sie durch diese hindurchgeht und eines ihrer Enden von der Außenseite der Magnetkopftrommel (1) her zugänglich ist und das andere Ende die Kopfhalterung (35) berührt,
dadurch gekennzeichnet,
daß die ortsfeste Trommel (10) auf einer ortsfesten Spindel (11) befestigt ist, die drehbare Manschette (20) auf der Spindel (11) drehbar gelagert ist und die drehbare Manschette (20) einen ersten Flansch (21) und einen zweiten Flansch (22), die in einem axialen Abstand angeordnet sind, aufweist, wobei die drehbare Trommel (30) am ersten Flansch (21) und der Rotor (41) des Motors (40) am zweiten Flansch (22) befestigt ist.

2. Trommel nach Anspruch 1, bei der der Rotor (41) des Motors (40) eine Vertiefung (42b) aufweist, in die der zweite Flansch (22) der Manschette eingepaßt ist.

3. Trommel nach Anspruch 1 oder 2, die weiterhin ein elastisches Erdungselement (37) umfaßt, das die Spindel (11) und die drehbare Trommel (30) elektrisch verbindet.

4. Trommel nach Anspruch 3, bei der das Erdungselement (37) an einem Ende einen Kontakt aufweist, mit dem es an die Spindel (11) angedrückt wird.

## Revendications

1. Tambour (1) de tête magnétique destiné à un appareil d'enregistrement et de lecture de données, le tambour (1) de tête comprenant :
un tambour fixe (10) ;
un manchon rotatif (20) ;
un tambour rotatif (30) supporté sur ledit manchon (20) ;
un moteur (40) pour faire tourner le tambour rotatif (30), le moteur (40) comportant un rotor (41) monté fermement sur le manchon (20) et un stator (46) monté fermement sur le tambour fixe (10) dans une disposition face à face et espacée par rapport au rotor (41) ;
un montage de tête (35), élastique, fixé à la partie rotative (30) ;
une tête magnétique (32) fixée au montage de tête (35) ; et
une vis (36) de réglage de tête pour régler la position de la tête magnétique (32) dans la direction axiale, la vis (36) de réglage de tête étant montée sur le tambour rotatif (30) et le traversant, et ayant une extrémité fonctionnellement accessible de l'extérieur du tambour (1) de tête magnétique et l'autre extrémité contactant le montage de tête (35) ;
caractérisé :
en ce que le tambour fixe (10) est monté fermement sur un axe fixe (11) ;
en ce que le manchon rotatif (20) est supporté de façon mobile en rotation sur l'axe (11) ; et
en ce que le manchon rotatif (20) a des première et seconde collerettes (21, 22) espacées axialement auxquelles le tambour rotatif (30) et le rotor (41) du moteur (40) sont, respectivement, fixés.

2. Tambour selon la revendication 1, dans lequel le rotor (41) du moteur (40) comporte un évidement (42b) dans lequel se monte la seconde collerette (22) du manchon.

3. Tambour selon la revendication 1 ou la revendication 2, comprenant en outre un élément élastique (37) de mise à la masse reliant électriquement l'axe (11) et le tambour rotatif (30).

4. Tambour selon la revendication 3, dans lequel l'élément (37) de mise à la masse possède à l'une de ses extrémités une borne de contact de façon à être poussé en contact avec l'axe (11).
